# EUROPEAN PATENT SPECIFICATION

(11) **EP 0 907 454 B1**
(45) Date of publication and mention of the grant of the patent: **05.03.2003**
(21) Application number: 97919773.8
(22) Date of filing: 05.05.1997
(51) Int. Cl.: B23K 11/31, F15B 15/20

(54) **IMPROVED OPERATING CYLINDER**
VERBESSERTER BETRIEBSZYLINDER
CYLINDRE DE COMMANDE AMELIORE

(30) Priority: 06.05.1996 NL 1003034
(43) Date of publication of application: 14.04.1999
(73) Proprietor: MACHINEFABRIEK SEMPRESS B.V., NL-3341 LJ Hendrik-Ido-Ambacht (NL)
(72) Inventor: NUGTEREN, Marinus, Willem, NL-4841 EC Prinsenbeek (NL)
(74) Representative: Eveleens Maarse, Pieter
(86) International application number: NL9700254
(87) International publication number: WO97041993

(56) References cited:
- EP-A- 0 628 372
- DE-A- 2 327 488
- DE-A- 4 012 968
- DE-C- 3 430 256
- DE-C- 4 328 741
- DE-U- 9 315 211

## Description

The present invention relates to a pneumatic operating cylinder for operating a tool in linear movement, wherein the operating cylinder comprises: a working cylinder which is divided by at least one piston arranged therein into at least a first and a second cylinder space, wherein the piston is connected to a piston rod onto which is fixed a spot welding electrode; and control means for controlling the movement of the piston, wherein the control means are connected to a compressed air feed channel and to an air discharge channel.

Such pneumatic operating cylinders are generally known. These are applied for instance in the form of spot welding cylinders in the automobile industry for making spot welds between the diverse components of the bodywork later forming an automobile and they are also used as drive for spot welding tongs.

It is highly important in these operating cylinders that the tool approaches the workpiece at the lowest possible speed in order to prevent bouncing of the tool and to prevent noise nuisance. It is of further importance that, once the tool is present on the workpiece, the workpiece is pressed on with the greatest possible force in order to obtain, for instance in the case of a spot welding cylinder, a weld of the required quality. Finally, all these processes must take place in the quickest possible succession to achieve the highest possible productivity. It is pointed out here that a contradiction thus arises between this latter speed requirement and the requirement that the tool approach the workpiece as slowly as possible.

In the operating cylinders of the prior art this dilemma results in a choice: a high speed is chosen in order to achieve the highest possible productivity and a comparatively high contact speed of the tool is therein tolerated, or a low contact speed of the tool is chosen, whereby the associated problems are avoided and a lower production speed must be accepted.

Therefore an aim exists to provide a linear operating cylinder wherein it is possible through a good control of the speed of the cylinder, for instance in the case of a spot welding cylinder, to cause the workpiece to be contacted by the electrode at a low speed and to cause the spot welding cylinder to be pressed on the workpiece with great force, wherein these operations take place at the greatest possible speed.

DE-C-4328741 discloses a pneumatic operating cylinder for operating a tool in linear movement, wherein the operating cylinder comprises:
- a working cylinder which is divided by at least one pistion arranged therein into at least a first and a second cylinder chamber, wherein the piston is connected to a piston rod onto which the tool is fixed; and
- control means for controlling the movement of the piston, wherein the control means are connected to a compressed air feed channel and to an air discharge channel,
wherein
- the control means are in a first position adapted to connect the compressed air feed channel to the first cylinder chamber and to connect the second cylinder chamber to the air discharge channel via a choke valve,
wherein the control means comprise an auxiliary valve which connects the second cylinder chamber directly to the discharge channel when the pressure in the second cylinder chamber is less than a predetermined factor times the pressure in the first cylinder chamber; and
- the control means are in a second position adapted to connect the first cylinder chamber to the air discharge channel and to connect the second cylinder chamber to the compresses air feed channel.

As a result of these steps compressed air is admitted into the first cylinder chamber, whereby the piston is moved. The normal pressure prevails initially in the second cylinder chamber so that the piston is propelled at a high speed. A back pressure develops gradually in the second cylinder chamber whereby the movement is slowed and contacting of the workpiece by the tool takes place at a low speed. It is pointed out here that the second cylinder chamber is connected to the environment by means of a choke valve so that the pressure in the second cylinder chamber is decreased by the restriction formed by the choke valve. When the piston has come to a stop there occurs as a result of the action of the choke valve a pressure decrease which is such that the pressure in the second cylinder chamber will be less than a predetermined factor times the pressure in the first cylinder chamber. As a consequence thereof the auxiliary valve will open whereby the second cylinder chamber is connected to the ambient and the pressure is here reduced to ambient pressure. This has the result. that the tool is pressed against the workpiece with a great press-on force.

However, there exists an aim for a still greater working speed.

Therefore the invention provides a pneumatic working cylinder wherein the predetermined factor is larger than one, and that the choke valve is adjustable.

The fact that the predetermined factor is larger than one leads to the results that the piston speed can be further enlarged without sacrifying a soft approach.

A further advantage resides in the collability of the speed through the adjustable choke valve.

The invention will now be elucidated with reference to the annexed drawings, in which:
figure 1 shows a sectional view of a first embodiment according to the present invention;
figure 2 shows a sectional view corresponding with figure 1 in a second position;
figure 3a shows a schematic view of a prior art cylinder;
figure 3b shows a view corresponding with figure 3a in a second position;
figure 3c shows a view corresponding with figures 3a and 3b in a third position;
figure 4 is a schematic view of another prior art cylinder; and
figure 5 is a schematic view of a third prior art cylinder.

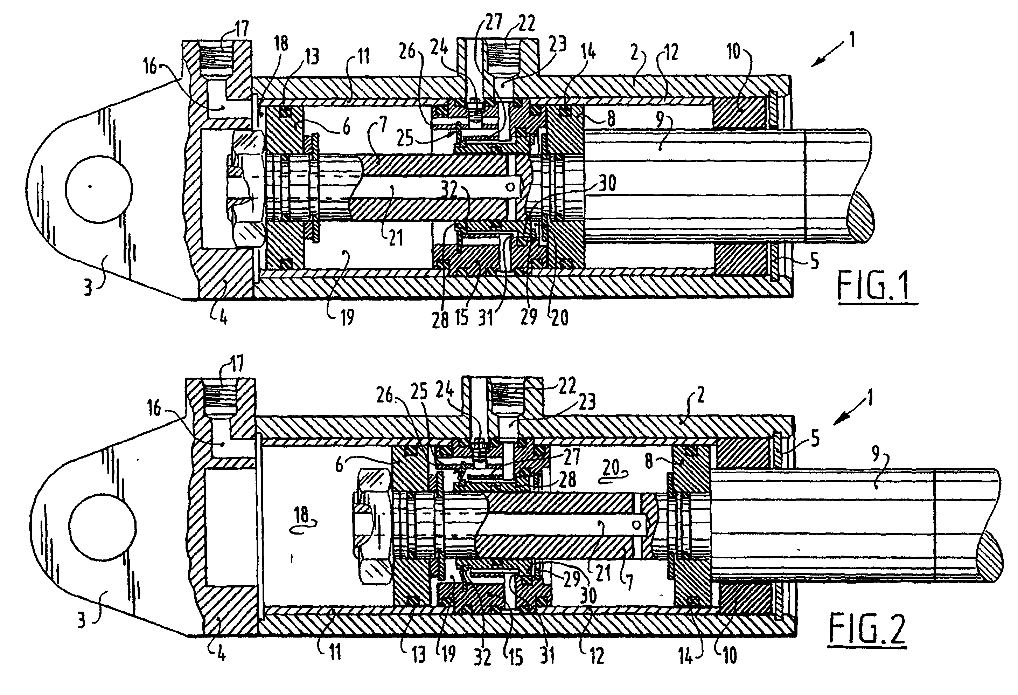

Depicted in sectional view in figure 1 is a spot welding cylinder 1 which is formed essentially by a cylindrical housing 2 which is closed on one end part by a cover 4 provided with a hinge 3. The housing is closed on the other side by a cover 5.

In cylindrical housing 2 is arranged a first piston 6 which is connected by means of a piston rod 7 to a second piston 8 which is connected to the main piston rod 9 which extends through an opening arranged in cover 5. Use is made to guide the piston rod of a piston rod guide 10 arranged in the housing. Cylinder barrels 11 respectively 12 are arranged on the inside of housing 2 for guiding the relevant pistons 6 respectively 8 which are each provided with piston seals 13 respectively 14. Further arranged in housing 2 is an element 15 which is enclosed in the housing between cylinder barrels 11, 12. Diverse components, to be elucidated hereinbelow, are accommodated in this element 15.

Arranged in cover 4 is a channel 16 which is connected on one side to a connection 17 and which debouches on its other side in the first cylinder chamber 18. A second cylinder chamber 19 is situated on the other side of piston 6, while a third cylinder chamber 20 is situated between the central element 15 and the second piston 8. The third cylinder chamber 20 is herein connected to the first cylinder chamber 18 by means of a channel 21 extending through the auxiliary piston rod 7.

At the position of central element 15 the housing 2 is provided with a connection 22 which debouches in a channel 23. This latter is connected to the second cylinder chamber 19 by means of a choke valve 24. Channel 23 is further connected by means of an annular non-return valve 25 to a second cylinder chamber 19. Non-return valve 25 is arranged such that it opens only when the pressure in channel 23 is greater than the pressure in second cylinder chamber 19. It is pointed out here that choke valve 24 is bounded on its inside by a wall 26 which is connected to the central element, while non-return valve 25 is received on its outside in the element 15 and rests on its inside against a valve seat formed by an internal ring 27. The internal ring 27 is also connected to central element 15. The actual annular body of non-return valve 25 is manufactured from flexible material, for instance plastic.

Finally, in the central element is arranged a sleeve 28 which is slidable in axial direction around the auxiliary piston rod 7. On one side the sleeve 28 thus adjoins the second cylinder chamber 19 and on its other side sleeve 28 adjoins the third cylinder chamber 20. The movement of sleeve 28 is bounded on its right-hand side by means of a ring 29 connected to central part 15, while the other side of the stroke of body 28 is bounded by a shoulder 30 arranged thereon which can contact a corresponding shoulder 31 arranged on central part 15. On the other side the sleeve 28 bears an O-ring 32 which in the shown position forms a seal against the internal ring 27. In the other extreme position an air gap is created between internal ring 27 and the relevant O-ring 32. It is noted herein that this is a tandem cylinder, i.e. a cylinder which is provided in at least one direction with two effective pistons.

The operation of the thus described spot welding cylinder will now be elucidated with reference to figures 1 and 2. It is herein noted that both connections 17,22 are connectable to a source of compressed air or to the ambient. Use is made for this purpose of valves and control circuits not shown in the figure but nevertheless usual in the relevant part of the art.

The initial starting point is the situation shown in figure 1, wherein a spot welding electrode which is arranged on piston rod 9 but not shown in the drawing must be moved toward a workpiece. For this purpose compressed air under the nominal pressure is initially supplied via connection 17. This compressed air is fed to the first cylinder chamber 18 via a channel 16 and also to third cylinder chamber 20 by means of channel 21. As a consequence of the pressure increase occurring thereon the combination of auxiliary piston rod 7, main piston rod 9 and both pistons 6,8 will begin to move to the right. Pressure is hereby built up in the second cylinder chamber 19. This pressure will in theory be able to develop to double the value of the pressure in first cylinder chamber 18.

It is pointed out that the second cylinder chamber 19 is connected by means of a choke valve 24 to the channel 23 which is connected to connection 22 and to the ambient. The air collecting under pressure in the second cylinder chamber 19 will hereby exit to the outside via choke valve 24. The movement will initially take place at a great speed, wherein as more pressure is built up in second cylinder chamber 19 despite the action of choke valve 24, the speed will be lower. By adjusting choke valve 24 in the correct manner it is possible to adjust the movement progress of the heretofore described unit such that the spot welding electrode contacts the workpiece at the desired speed.

When contact has occurred, whereby the speed of the movement is reduced to zero, no further pressure build-up will take place in chamber 19; on the contrary, due to the action of choke valve 24 the pressure will be decreased, this up to the moment at which the pressure in the second cylinder chamber 19 is lower than a predetermined factor times the pressure prevailing in the first and third cylinder chamber 18 respectively 20. When this is the case, the sleeve 28 will be displaced to the left by the action of the pressure prevailing in cylinder chamber 20, wherein the situation is obtained as shown in figure 2. The second cylinder chamber 19 is thus connected directly to the ambient air through the gap between O-ring 32 and the internal ring 27. The pressure in space 19 will hereby fall away, whereby the pressure prevailing in the first and third cylinder chamber 18 respectively 20 will press the spot welding electrode with full force against the workpiece.

The electrical spot welding operation can then take place.

After the welding operation is completed, the spot welding electrode must be moved back from the situation shown in figure 2 in order to reposition the workpiece. For this purpose the connection 17 is connected to the ambient and compressed air is supplied via connection 22. It will be apparent that due to the action of non-return valve 25, which will open under the pressure of the compressed air supplied via connection 22, the first piston 6 will be moved to the left. It is noted here that the first and third cylinder chamber 18 respectively 20 are both connected to the ambient via the connection 17. This movement will therefore continue until the original situation shown in figure 1 is once again obtained.

Although the above embodiment relates to a spot welding cylinder, it will be apparent that the invention is also applicable in other types of linear operating cylinders, wherein a similar movement profile is desired.

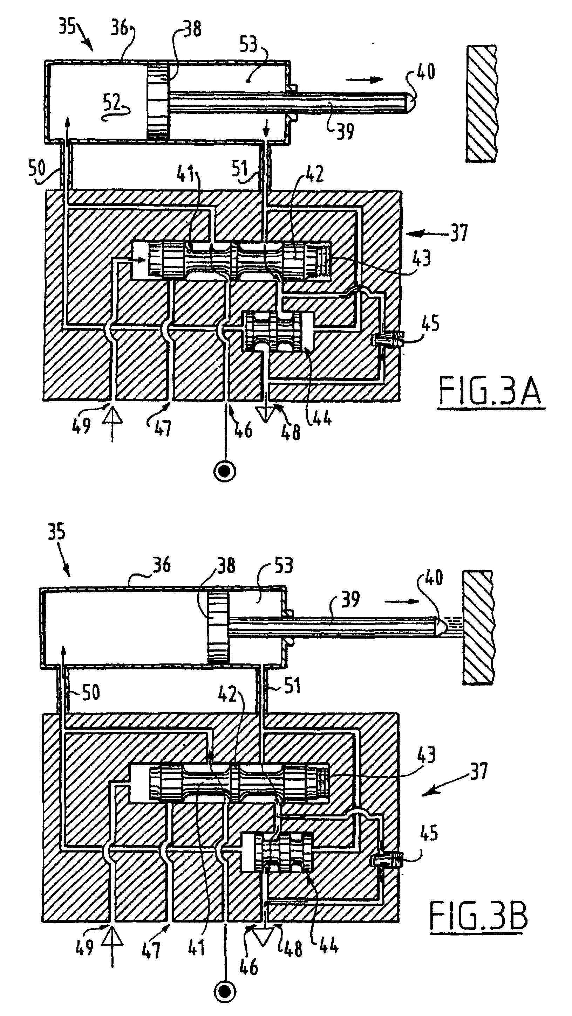

In the above embodiment the means for supplying compressed air to or connecting of both connections 17 and 22 to the outside air are omitted and the control is accommodated in the cylindrical housing 2. It is equally possible however to apply the present invention in a situation where use is made of an actual operating cylinder of currently usual type and wherein the control equipment is arranged integrally in an external element which can be arranged for instance as an attachment to an existing operating cylinder. Such an embodiment is shown in figure 3a, showing a prior art construction for explanation purposes.

Once again shown in figure 3a is a spot welding cylinder designated as a whole with 35 and formed by a housing 36 and a control block 37. In cylindrical housing 36 is arranged a piston 38 which is connected to a piston rod 39. This latter is provided on its end with a spot welding electrode 40. It is also possible to use the cylinder to drive spot welding tongs. Arranged in control block 37 is a main valve 41 in the form of a so-called 5/2 valve. This valve is formed by a cavity 42 which is arranged in block 37 and in which a valve body 42 is movable. The valve body 42 is urged by means of a spring 43 to its position furthest to the left. The control block is further provided with four connections, i.e. a connection 46 for supply of compressed air, two connections 47,48 for connection to the ambient and a control connection 49.

The operation will now be elucidated, as will the configuration of the channels arranged in control block 37. It is pointed out herein that control block 37 is connected by means of two channels 50 respectively 51 to the first cylinder space 52 respectively the second cylinder space 53.

In order to cause electrode 40 to move to the right air is supplied to main valve 41 by means of control connection 49, whereby valve body 42 will move to the position drawn in figure 3a counter to the spring pressure of spring 43. Compressed air coming from the connection 46 for supply of compressed air will hereby be able to reach the first cylinder space 52 via valve 42 and channel 50, whereby piston 38 with the piston rod and electrode 40 attached thereto will move initially at a controlled speed to the right. This speed is determined by choke valve 45 in the same manner as in the foregoing embodiment. Here also the second cylinder space 53 is connected by means of choke valve 45 to connection 48 and thus to the ambient.

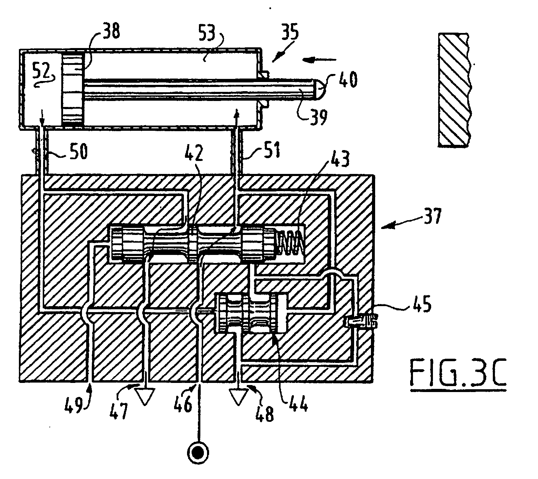

When the welding electrode 40 reaches the workpiece the pressure in the second cylinder space 53 will fall whereby valve 44 will displace to the position shown in figure 3b. Valve 44 thus forms a direct short-circuiting of choke valve 45 whereby the space 53 is rapidly vented and the firm pressing-on is obtained. After welding the supply of compressed air to the control connection 49 is stopped, whereby the position shown in figure 3c is obtained. The body 42 has herein returned to its original position wherein the connection 46 is directly connected to the second cylinder space 53 and the first cylinder space 52 is directly connected to the ambient. Due to the pressure difference occurring between the spaces 52 and 53 the auxiliary valve 44 is also moved back to its original position.

It will be apparent that no non-return valve is necessary in the embodiment shown in figures 3a-3c. This is a result of the fact that the auxiliary valve is arranged on the feed side of main valve 42.

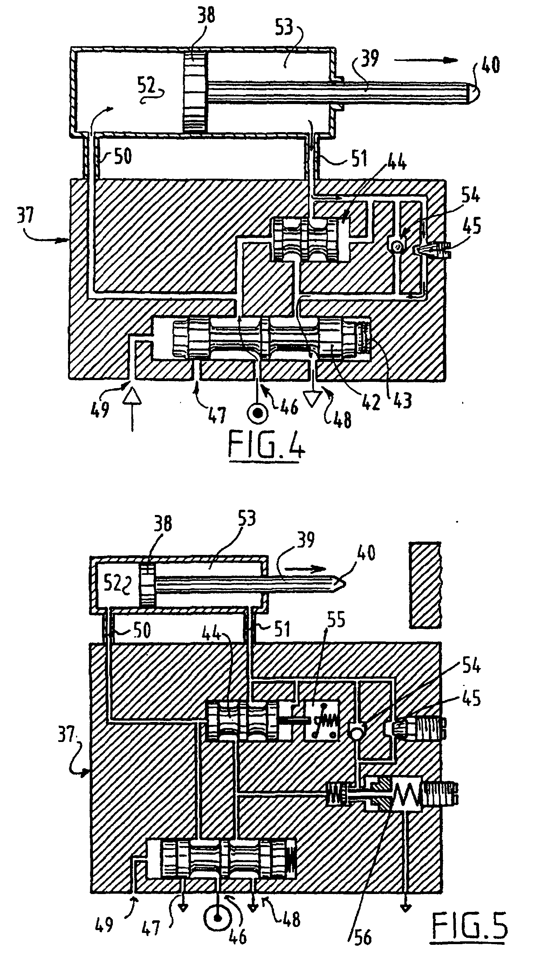

It is likewise possible to use a configuration which corresponds more with the configuration of figures 1 and 2; such a prior art configuration is shown for explanation purposes in figure 4, wherein it will be apparent that choke valve 45 is provided with a non-return valve 54 connected in parallel. The operation of this non-return valve 54 can be easily inferred from that of non-return valve 25 of the embodiment shown in figures 1 and 2.

The embodiment shown in figure 5 corresponds substantially with the embodiment shown in figure 4, showing a prior art construction for explanation purposes; the embodiment shown in figure 5 is provided with an electric switch 55 which responds to the position of valve 44. This switch can be used to generate a signal which indicates when valve 44 moves or when in the present case the electrode 40 is pressed fixedly against the workpiece. Such a signal can be used to initiate the following process, for instance the welding.

The embodiment shown in figure 5 further differs in that it is provided with a pressure regulating valve 56. This latter is connected in series to the parallel circuit of choke valve 45 and non-return valve 54. The pressure regulating valve 56, which is adjustable, ensures that during the return movement of piston rod 39 the feeding pressure can be adjusted just sufficiently to move back the piston rod 39, whereby during the outward movement of piston rod 39 the speed becomes dependent on the adjusted pressure.

It will be apparent that this pressure regulating valve 56 can also be applied in the configuration of figures 3a and 3b. This pressure regulating valve is there connected in series to choke valve 45. In principle this pressure regulating valve can also be applied in the embodiment of figures 1 and 2; the valve will then have to be integrated into the element 15.

It will be apparent that diverse other embodiments are also possible for the purpose of implementing the invention within the scope of the present invention as defined in the appended claims.

## Claims

1. Pneumatic operating cylinder for operating a tool in linear movement, wherein the operating cylinder comprises:
- a working cylinder (1:35) which is divided by at least one piston (6; 38) arranged therein into at least a first (18;52) and a second (19;53) cylinder chamber, wherein the piston (6;38) is connected to a piston rod (7,9;39) onto which the tool (40) is fixed; and
- control means (24-31;37) for controlling the movement of the piston (6), wherein the control means comprise a choke valve (24; 25) and (24-31;37) are connected to a compressed air feed channel (16;46) and to an air discharge channel (23;47,48), and are switchable between a first and second position
wherein
- the first position is adapted to connect the compressed air feed channel (16;46) to the first cylinder chamber (18;52) and to connect the second cylinder chamber (19;53) to the air discharge channel (23;48) via the choke valve (24;45), wherein the control means (24-31;37) comprise an auxiliary valve (28;41) which connects the second cylinder chamber (19;53) directly to the discharge channel (23;48) when the pressure in the second cylinder chamber (19;53) is less than a predetermined factor times the pressure in the first cylinder chamber (18:52): and
- the second position is adapted to connect the first cylinder chamber (18;52) to the air discharge channel (23;47) and to connect the second cylinder chamber (19;53) to the compresses air feed channel (16;46), **characterized in that** the predetermined factor is larger than one, and that the choke valve (24;45) is adjustable.

2. Pneumatic operating cylinder as claimed in claim 1, **characterized in that** the surface area of the auxiliary valve (28;44) connected to the first cylinder chamber (18,20) is larger than the surface area of the auxiliary valve (28;44) connected to the second cylinder chamber (19;53) and the auxiliary valve (28;44) is bypassed by a non-return valve (25;41).

3. Pneumatic operating cylinder as claimed in claim 1 or 2, **characterized in that** the auxiliary valve (28;44) is coupled to a switch (55) for generating a signal when the auxiliary valve (28;44) is displaced.

4. Pneumatic operating cylinder as claimed in claim 2, **characterized in that** at least the choke valve (24), the auxiliary valve (28) and the non-return valve (25) forming part of the control means (24-31) are integrated into the working cylinder (1).

5. Pneumatic operating cylinder as claimed in claim 4, **characterized in that** the auxiliary valve (28) is formed by a sleeve (28) which is slidable on the piston rod (7), provided with shoulders (30) and arranged at the position of an intermediate wall (15) in the cylinder (1).

6. Pneumatic operating cylinder as claimed in claim 4 or 5, **characterized in that** the non-return valve is formed by a skirt (25) arranged concentrically round the piston rod (7) and manufactured from flexible material.

7. Pneumatic operating cylinder as claimed in any of the claims 5 or 6, **characterized in that** the cylinder (1) is provided with a second piston (8) and wherein the chamber (20) between the intermediate wall (15) and the second piston (8) is connected to the first cylinder chamber (18).

8. Pneumatic operating cylinder as claimed in claim 1 or 2, **characterized in that** a switching part of the control means (37) is arranged outside the working cylinder (35) and the switching part of the control means (37) and the cylinder (35) are connected by two channels (50, 51) which change function during switching of the switching part of the control means (37).

9. Pneumatic operating cylinder as claimed in claim 8, **characterized in that** the control means (37) are arranged outside the working cylinder (35), comprises at least the choke valve (44) and the switching part (41) and is connectable by at least two channels (50, 51) to the working cylinder (35).

10. Pneumatic operating cylinder as claimed in claim 9, **characterized in that** the auxiliary valve (44) is arranged in the control means (37) on the feeding side of the switching part (41).

11. Pneumatic operating cylinder as claimed in claim 9 or 10, **characterized in that** the control means (37) are releasably connectable to the working cylinder (35).

## Patentansprüche

1. Pneumatischer Betriebszylinder zur linearen Verschiebung eines Werkzeugs,
wobei der Betriebszylinder folgende Teile umfaßt:
- einen Arbeitszylinder (1; 35), der durch wenigstens einen darin laufenden Kolben (6; 38) in wenigstens eine erste Zylinderkammer (18; 52) und eine zweite Zylinderkammer (19; 53) geteilt ist, wobei der Kolben (6; 38) mit einer Kolbenstange (7, 9; 39) verbunden ist, an der das Werkzeug (40) fixiert ist; und
- Steuermittel (24-31; 37) zur Steuerung der Bewegung des Kolbens (6), wobei die Steuermittel ein Drosselventil (24; 25 und 24-31; 37) mit einem Druckluftzuführungskanal (16; 46) und einem Luftablaßkanal (23; 47, 48) verbunden und zwischen einer ersten und einer zweiten Stellung schaltbar sind,
wobei
- die erste Stellung dazu dient, den Druckluftzuführungskanal (16; 46) mit der ersten Zylinderkammer (18; 52) und die zweite Zylinderkammer (19; 53) mit dem Luftablaßkanal (23; 48) über das Drosselventil (24; 45) zu verbinden, wobei die Steuermittel (24-31; 37) ein Hilfsventil (28; 41) aufweisen, das die zweite Zylinderkammer (19; 53) direkt mit dem Ablaßkanal (23; 48) verbindet, wenn der Druck in der zweiten Zylinderkammer (19; 53) kleiner ist als ein vorbestimmter Faktor, multipliziert mit dem Druck in der ersten Zylinderkammer (18; 52); und
- in der zweiten Stellung die erste Zylinderkammer (18; 52) mit dem Luftablaßkanal (23; 47) verbunden und die zweite Zylinderkammer (19; 53) mit dem Druckluftzuführungskanal (16; 46) verbunden ist,
**dadurch gekennzeichnet, daß** der vorbestimmte Faktor größer als Eins ist und daß das Drosselventil (24; 45) einstellbar ist.

2. Pneumatischer Betriebszylinder nach Anspruch 1,
**dadurch gekennzeichnet, daß** der Oberflächenbereich des mit der ersten Zylinderkammer (18, 20) verbundenen Hilfsventils (28; 44) größer ist als der Oberflächenbereich des mit der zweiten Zylinderkammer (19; 53) verbundenen Hilfsventils (28; 44) und daß das Hilfsventil (28; 44) durch ein Rückschlagventil (25; 41) nebengeschlossen ist.

3. Pneumatischer Betriebszylinder nach einem der Ansprüche 1 oder 2,
**dadurch gekennzeichnet, daß** das Hilfsventil (28; 44) mit einem Schalter (55) gekoppelt ist, um ein Signal zu erzeugen, wenn das Hilfsventil (28; 44) versetzt wird.

4. Pneumatischer Betriebszylinder nach Anspruch 2,
**dadurch gekennzeichnet, daß** wenigstens das Drosselventil (24), das Hilfsventil (28) und das Rückschlagventil (25) einen Teil der Steuermittel (24-31) bilden und in den Arbeitszylinder (1) integriert sind.

5. Pneumatischer Betriebszylinder nach Anspruch 4,
**dadurch gekennzeichnet, daß** das Hilfsventil (28) von einer Hülse (28) gebildet ist, die auf der Kolbenstange (7) gleitbar ist, welche mit Schultern (30) versehen und an einer Stelle einer Zwischenwand (15) im Zylinder (1) angeordnet ist.

6. Pneumatischer Betriebszylinder nach den Ansprüchen 4 oder 5,
**dadurch gekennzeichnet, daß** das Rückschlagventil eine Ringscheibe (25) aufweist, die konzentrisch um die Kolbenstange (7) herum angeordnet und aus flexiblem Material hergestellt ist.

7. Pneumatischer Betriebszylinder nach einem der Ansprüche 5 oder 6,
**dadurch gekennzeichnet, daß** der Zylinder (1) mit einem zweiten Kolben (8) ausgerüstet ist und daß die Kammer (20) zwischen der Zwischenwand (15) und dem zweiten Kolben (8) mit der ersten Zylinderkammer (18) verbunden ist.

8. Pneumatischer Betriebszylinder nach den Ansprüchen 1 oder 2,
**dadurch gekennzeichnet, daß** ein Schaltelement der Steuermittel (37) außerhalb des Arbeitszylinders (35) angeordnet ist und daß das Schaltelement der Steuermittel (37) und der Zylinder (35) durch zwei Kanäle (50, 51) verbunden sind, die während der Umschaltung des Schaltelementes der Steuermittel (37) die Funktion ändern.

9. Pneumatischer Betriebszylinder nach Anspruch 8,
**dadurch gekennzeichnet, daß** die Steuermittel (37) außerhalb des Arbeitszylinders (35) angeordnet sind und wenigstens das Drosselventil (44) und das Schaltelement (41) umfassen und durch wenigstens zwei Kanäle (50, 51) mit dem Arbeitszylinder (35) verbindbar sind.

10. Pneumatischer Betriebszylinder nach Anspruch 9,
**dadurch gekennzeichnet, daß** das Hilfsventil (44) in den Steuermitteln (37) auf der Zuführungsseite des Schaltelementes (41) angeordnet ist.

11. Pneumatischer Betriebszylinder nach den Ansprüchen 9 oder 10,
**dadurch gekennzeichnet, daß** die Steuermittel (37) lösbar mit dem Arbeitszylinder (35) verbindbar sind.

## Revendications

1. Cylindre de commande pneumatique pour faire fonctionner un outil en mouvement linéaire, dans lequel le cylindre de commande comprend :
un cylindre de travail (1; 35) qui est divisé par au moins un piston (6; 38) disposé à cet égard dans au moins une première (18; 52) et une seconde (19 ; 53) chambres de cylindre, dans lequel le piston (6 ; 38) est relié à une tige de piston (7,9; 39) sur laquelle l'outil (40) est fixé ; et
des moyens de commande (24 à 31 ; 37) pour commander le mouvement du piston (6), dans lequel les moyens de commande (24 à 31 ; 37) comprennent un étrangleur (24; 25) et sont reliés à une conduite d'alimentation d'air comprimé (16; 46) et à une conduite d'évacuation d'air (23 ; 47, 48) et sont commutables entre une première et une seconde positions, dans lequel
la première position est adaptée pour raccorder la conduite d'alimentation d'air comprimé (16; 46) à la première chambre de cylindre (18; 52) et pour raccorder la seconde chambre de cylindre (19; 53) à la conduite d'évacuation d'air (23 ; 48) via l'étrangleur (24 ; 45),
dans lequel les moyens de commande (24 à 31 ; 37) comprennent une vanne auxiliaire (28; 41) qui relie la seconde chambre de cylindre (19; 53) directement à la conduite d'évacuation (23 ; 48) lorsque la pression présente dans la seconde chambre de cylindre (19; 53) est inférieure à un facteur prédéterminé qui règle la pression dans la première chambre de cylindre (18; 52); et
la seconde position est adaptée pour raccorder la première chambre de cylindre (18; 52) à la conduite d'évacuation d'air (23; 47) et pour raccorder la seconde chambre de cylindre (19 ; 53) à la conduite d'alimentation d'air comprimé (16; 46), **caractérisé en ce que** le facteur prédéterminé est supérieur à un, et que l'étrangleur (24 ; 45) est réglable.

2. Cylindre de commande pneumatique selon la revendication 1, **caractérisé en ce que** la surface de la vanne auxiliaire (28; 44) reliée à la première chambre de cylindre (18, 20) est supérieure à la surface de la vanne auxiliaire (28 ; 44) reliée à la seconde chambre de cylindre (19 ; 53) et la vanne auxiliaire (28 ; 44) est dérivée par un clapet de non-retour (25 ; 41).

3. Cylindre de commande pneumatique selon la revendication 1 ou 2, **caractérisé en ce que** la vanne auxiliaire (28 ; 44) est couplée à un interrupteur (55) pour générer un signal lorsque la vanne auxiliaire (28 ; 44) est déplacée.

4. Cylindre de commande pneumatique selon la revendication 2, **caractérisé en ce qu'**au moins l'étrangleur (24), la vanne auxiliaire (28) et le clapet de non-retour (25) qui font partie intégrante des moyens de commande (24 à 31) sont intégrés dans le cylindre de travail (1).

5. Cylindre de commande pneumatique selon la revendication 4, **caractérisé en ce que** la vanne auxiliaire (28) est formée par un manchon (28) qui peut coulisser sur la tige de piston (7), prévue avec des épaulements (30) et disposée à la position d'une paroi intermédiaire (15) dans le cylindre (1).

6. Cylindre de commande pneumatique selon la revendication 4 ou 5, **caractérisé en ce que** le clapet de non-retour est formé par une jupe (25) disposée de façon concentrique autour de la tige de piston (7) et fabriquée à partir de matériau souple.

7. Cylindre de commande pneumatique selon l'une quelconque des revendications 5 ou 6, **caractérisé en ce que** le cylindre (1) est prévu avec un second piston (8) et dans lequel la chambre (20) située entre la paroi intermédiaire (15) et le second piston (8) est reliée à la première chambre de cylindre (18).

8. Cylindre de commande pneumatique selon la revendication 1 ou 2, **caractérisé en ce qu'**une pièce de commutation des moyens de commande (37) est disposée à l'extérieur du cylindre de travail (35) et la pièce de commutation des moyens de commande (37) et le cylindre (35) sont reliés par deux conduites (50, 51) qui changent de fonction pendant la commutation de la pièce de commutation des moyens de commande (37).

9. Cylindre de commande pneumatique selon la revendication 8, **caractérisé en ce que** les moyens de commande (37) sont disposés à l'extérieur du cylindre de travail (35), comprend au moins l'étrangleur (44) et la pièce de commutation (41) et qui peut être relié par au moins deux conduites (50, 51) au cylindre de travail (35).

10. Cylindre de commande pneumatique selon la revendication 9, **caractérisé en ce que** la vanne auxiliaire (44) est disposée dans les moyens de commande (37) sur le côté d'alimentation de la pièce de commutation (41).

11. Cylindre de commande pneumatique selon la revendication 9 ou 10, **caractérisé en ce que** les moyens de commande (37) peuvent être reliés de façon amovible au cylindre de travail (35).
